# EUROPEAN PATENT APPLICATION

(11) **EP 4 624 390 A1**
(43) Date of publication of application: **01.10.2025**
(21) Application number: 25161533.2
(22) Date of filing: 04.03.2025
(51) Int. Cl.: B65H 31/02, B65H 31/24

(54) **DOCUMENT CONVEYING DEVICE**

(30) Priority: 25.03.2024 JP 2024047614
(71) Applicant: KYOCERA Document Solutions Inc., Osaka-shi, Osaka, 540-8585 (JP)
(72) Inventor: ISODA, Ren, Osaka-shi, Osaka, 540-8585 (JP); NAKAGAWA, Takafumi, Osaka-shi, Osaka, 540-8585 (JP); TOKORO, Yoshitaka, Osaka-shi, Osaka, 540-8585 (JP); OGAWA, Shikitaro, Osaka-shi, Osaka, 540-8585 (JP)
(74) Representative: Kurig, Thomas

(57) **Abstract**

A document conveying device (1) includes a cover (17), a rigid stopper (95), and a biasing member (97). The cover (17) includes a first cover plate (91) and a second cover plate (93). The stopper (95) is rigid, has a fixed end (95b) rotatably connected to the cover (17) and a movable end (95b) moving in an elongated hole (113) formed in the device main body (11) accordance with a turning of the cover (17), and supports the cover (17) in a fully opened posture when the movable end (95b) is locked to one end of the elongated hole (113). The biasing member (97) moves the movable end (95b) of the stopper (95) to a position P separated by a predetermined distance from the one end of the elongated hole (113).

## Description

### BACKGROUND

The present disclosure relates to a document conveying device provided with an openable and closable discharge tray.

In many cases, the document conveying device is configured to read an image while conveying a document along a U-shaped curved conveyance path. In this case, a small size document such as a business card or a card or a large and hard document may not be smoothly conveyed through the curved conveyance path.

Therefore, as disclosed in JP2023-174052, the conveyance path includes a linear first conveyance path along which the document placed on a sheet feeding tray is conveyed, a curved second conveyance path branched from the first conveyance path, and a linear third conveyance path branched from the first conveyance path and extending in the same direction as the extending direction of the first conveyance path. The document discharged from a discharge port of the third conveyance path is loaded on a discharge tray.

The discharge tray includes a connection part rotatably supported on the device main body and a tray body rotatably connected to the connection part. When not in use, the discharge tray is housed in a housing recess provided over a side surface and an upper surface of the device main body.

In the document conveying device described above, generally, when the discharge tray is formally housed in the housing recess, a detection sensor detects a fully closed state of the discharge tray, and restricts discharging of the document from the third conveyance path. In this case, when the discharge tray is in the half-open state, the detection sensor does not detect the closed state, and there is a problem that the document may be discharged from the discharge port of the third conveyance path even if the discharge tray is not fully opened.

### SUMMARY

A document conveying device according to the present disclosure includes a cover, a stopper, and a biasing member. The cover includes a first cover plate and a second cover plate. The first cover plate is turnably supported by a side surface of a device main body, and covers a part of the side surface. The second cover plate, is turnably connected to the first cover plate and covers a part of an upper surface of the device main body. The stopper is rigid, has a fixed end rotatably connected to the cover and a movable end moving in an elongated hole formed in the device main body accordance with a turning of the cover, and supports the cover in a fully opened posture when the movable end is locked to one end of the elongated hole. The biasing member moves the movable end of the stopper to a position P separated by a predetermined distance from the one end of the elongated hole. When the cover is closed in such a way that the second cover plate is turned with respect to the first cover plate and then the first cover plate is turned with respect to the device main body, a force for turning the cover in a closing direction caused by its own weight is set to F1, and a force for turning the cover in an opening direction caused by its own weigh is set to F2, the position P is set such that the force F1 is larger than the force F2 (F1 > F2), and a biasing force of the biasing member is set smaller than the force F2. When the cover is closed, in a state where the movable end of the stopper is moved between the one end and a position in front of the position P, the movable end is biased to the position P by the biasing member, and the cover is turned to a fully closed posture by the force F1.

### BRIEF DESCRIPTION OF THE DRAWINGS

FIG. 1 is a cross-sectional view schematically showing an internal structure (a state in which a second discharge tray is turned to a fully closed posture) of a document conveying device according to one embodiment of the present disclosure.
FIG. 2 is a cross-sectional view schematically showing the internal structure (a state in which the second discharge tray is turned to a fully opened posture) of the document conveying device according to the embodiment of the present disclosure.
FIG. 3 is a side view schematically showing the second discharge tray, a stopper, and a biasing member in the document conveying device according to the embodiment of the present disclosure.
FIG. 4 is a side view showing the second discharge tray turned in the fully closed posture, the stopper, and the biasing member in the document conveying device according to an embodiment of the present disclosure.
FIG. 5 is a side view showing the second discharge tray turned in the fully opened posture, the stopper, and the biasing member in the document conveying device according to an embodiment of the present disclosure.
FIG. 6 is a side view showing the second discharge tray during turning, the stopper, and the biasing member in the document conveying device according to an embodiment of the present disclosure.
FIG. 7 is a side view showing the second discharge tray in a half-open state, the stopper, and the biasing member in the document conveying device according to an embodiment of the present disclosure.

### DETAILED DESCRIPTION

Hereinafter, with reference to the drawings, a document conveying device according to one embodiment of the present disclosure will be described.

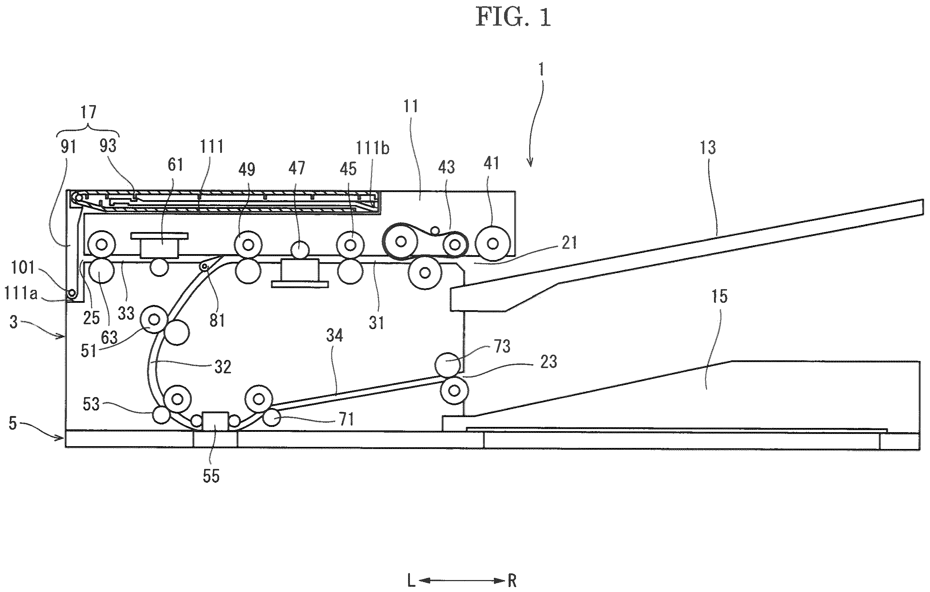

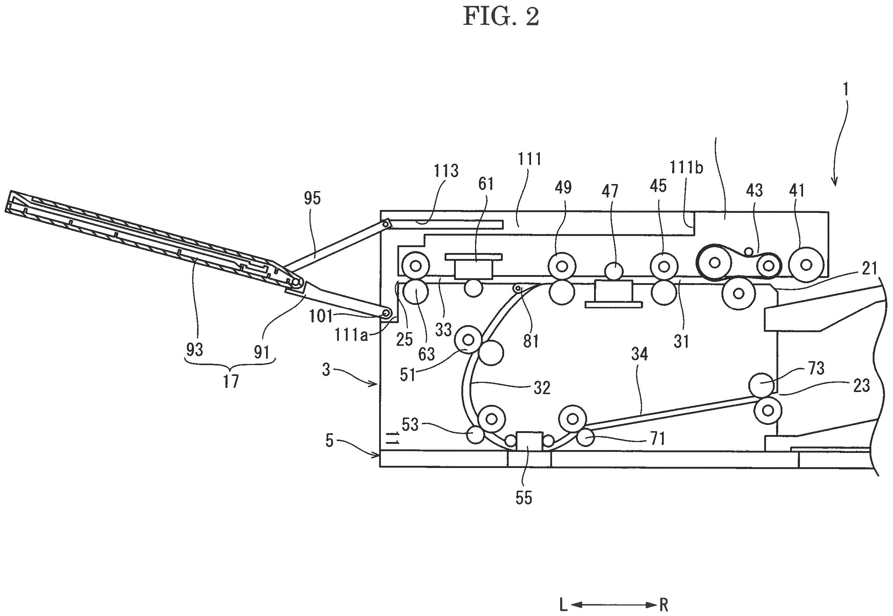

First, with reference to FIG. 1 and FIG. 2, the entire structure of the document conveying device 1 will be described. FIG. 1 and FIG. 2 are cross-sectional views schematically showing the internal structure of the document conveying device 1. In each figure, Fr, Rr, L, and R indicate the front side, rear side, left side, and right side of the document conveying device 1, respectively.

The document conveying device 1 is placed on, for example, an upper surface of an image forming apparatus (not shown). The document conveying device 1 automatically conveys a document and reads image of both sides (front side and rear side) or one side of the conveyed document. The image forming apparatus forms an image corresponding to the image read by the document conveying device 1 on both sides or one side of a sheet. Alternatively, the document conveying device 1 may be electrically connected to an external computer, and used as a document reading device (document input device, scanner) .

The document conveying device 1 includes a document conveying unit 3 and an image reading unit 5. The document conveying unit 3 conveys the document and reads the image of one side or both sides of the document. The image reading unit 5 reads an image of one side of the conveyed or placed document. The document conveying unit 3 is rotatably supported at the rear end of the image reading unit 5. The detailed description of the image reading unit 5 is omitted.

The document conveying unit 3 includes a conveying part 11 which conveys the document and reads the image of the document, a sheet feeding tray 13 on which the document whose image is read by the conveying part 11 is placed, and a first discharge tray 15 and a second discharge tray 17 on which the document whose image is read by the conveying part 11 is loaded.

First, the conveying part 11 will be described. On the right side surface of the conveying part 11, a sheet feed port 21 and a first discharge port 23 are formed. The first discharge port 23 is disposed below the sheet feed port 21. On the left side surface of the conveying part 11, a second discharge port 25 is formed. The second discharge port 25 is formed at substantially the same height as the sheet feed port 21.

The conveying part11 includes a document conveyance path. The conveyance path includes a first conveyance path 31, a second conveyance path 32, a third conveyance path 33, and a fourth conveyance path 34.

The first conveyance path 31 extends leftward from the sheet feed port 21 linearly. On the first conveyance path 31, a pickup roller 41, a separation roller unit 43, a first pair of conveying rollers 45, a first reading part 47, and a second pair of conveying rollers 49 are provided along the conveyance direction.

The second conveyance path 32 branches from the downstream end of the first conveyance path 31 and is curved downward in an arc shape. On the second conveyance path 32, a third pair of conveying rollers 51, a fourth pair of conveying rollers 53, and a reading guide 55 are provided along the conveyance direction. The reading guide 55 faces the reading part of the image reading unit 5.

The third conveyance path 33 branches from the downstream end of the first conveyance path 31 and extends leftward toward the second discharge port 25. The third conveyance path 33 is formed in a linear line along the same left direction as the extending direction of the first conveyance path 31. That is, the first conveyance path 31 and the third conveyance path 33 form a linear conveyance path. The linear shape includes a shape in which the document to be conveyed is not inverted and a shape in which the document to be conveyed is not bent, and indicates a shape in which the plastic card can be conveyed without resistance (without curving or bending). On the third conveyance path 33, a second reading part 61 and a pair of discharge rollers 63 are provided along the conveyance direction.

The fourth conveyance path 34 extends from the downstream end of the second conveyance path 32 in an oblique upper and right direction toward the first discharge port 23. On the fourth conveyance path 34, a fifth pair of conveying rollers 71 and a pair of discharge rollers 73 are provided along the conveyance direction.

A branch guide 81 is provided at a branching point between the second conveyance path 32 and the third conveyance path 33. The branch guide 81 guides the document conveyed along the first conveyance path 31 to either the second conveyance path 32 or the third conveyance path 33.

Next, the sheet feeding tray 13 will be described. The sheet feeding tray 13 is supported by the conveying part 11 in a posture inclined downward toward the sheet feed port 21.

Next, the first discharge tray 15 and the second discharge tray 17 will be described. On the first discharge tray 15, the document discharged through the first discharge port 23 is loaded. On the second discharge tray 17, the document discharged through the second discharge port 25 is loaded.

First, the first discharge tray 15 will be described. The first discharge tray 15 is provided below the sheet feeding tray 13, and integrally with the conveying part 11. On the upper surface of the first discharge tray 15, a document placement surface inclined in an upper and right direction is formed.

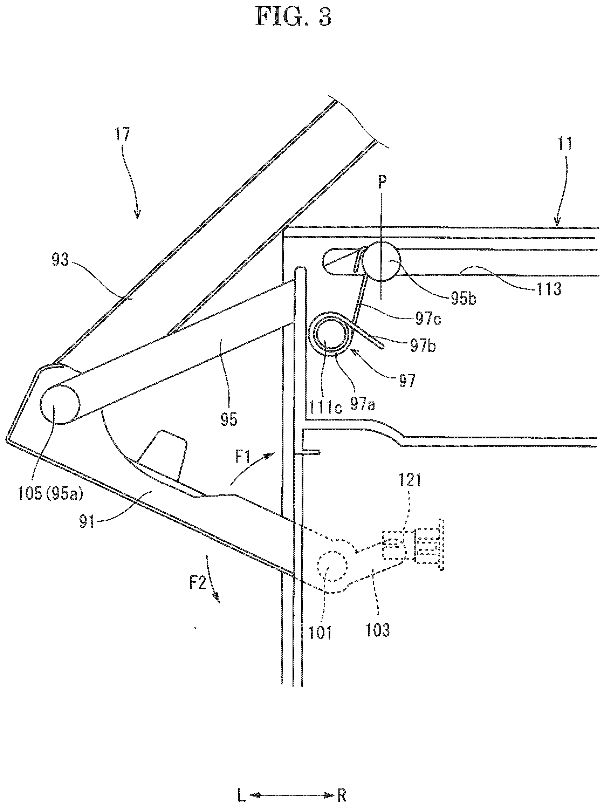

Next, the second discharge tray 17 will be described with reference to FIG. 1, FIG. 2, and FIG. 3. FIG. 3 is a view schematically showing the second discharge tray 17. The second discharge tray 17 includes a first tray plate 91 rotatably supported on the left side surface of the conveying part 11, a second tray plate 93 rotatably connected to the first tray plate 91, a stopper 95 (see FIG. 2 and FIG. 3) disposed between the first tray plate 91 and the conveying part 11, and a torsion coil spring 97 (see FIG. 3) which biases the stopper 95. The conveying part 11 is an example of the device main body in the present disclosure, the second discharge tray 17 is an example of the cover in the present disclosure, and the first tray plate 91 and the second tray plate 93 are examples of the first cover plate and the second cover plate in the present disclosure.

First, the first tray plate 91 will be described. The first tray plate 91 is rotatably supported by a rotational shaft 101 provided below the second discharge port 25. On the inner surface of the first tray plate 91, a document placement surface on which the document discharged through the second discharge port 25 is loaded is formed. The first tray plate 91 has a light blocking piece 103 (see FIG. 3) projecting downward from the lower end.

Next, the second tray plate 93 will be described. The second tray plate 93 is formed longer than the first tray plate 91. On the inner surface of the second tray plate 93, a document placement surface on which the document discharged through the second discharge port 25 is loaded is formed. The second tray plate 93 is rotatably supported by a rotational shaft 105 provided at the distal end of the first tray plate 91. When the second tray plate 93 is opened with respect to the first tray plate 91, the second tray plate 93 is maintained in a posture turned by 180° with respect to the first tray plate 91 by a regulating part (not shown) .

The first tray plate 91 and the second tray plate 93 are turnable into a fully opened posture capable of loading the document discharged through the second discharge port 25, and a fully closed position housed in the conveying part 11. As shown in FIG. 2, in the fully opened posture, the first tray plate 91 is turned at a predetermined angle with respect to the left side surface of the conveying part 11, and the second tray plate 93 is turned at 180° with respect to the first tray plate 91. As shown in FIG. 1, in the fully closed posture, the first tray plate 91 is turned substantially in parallel with the left side surface of the conveying part 11, and the second tray plate 93 is turned at 90° with respect to the first tray plate 91. The conveying part 11 has a housing recess 111 in which the second discharge tray 17 turned in the fully closed posture is housed. The housing recess 111 is formed in an L-shape when viewed from the front side, and has a left recess 111a formed on the left side surface and an upper recess 111b formed on the upper surface of the conveying part 11. The first tray plate 91 is housed in the left recess 111a, and the second tray plate 93 is housed in the upper recess 111b. In the side walls of the upper recess 111b, elongated holes 113 (see FIG. 3) are formed along the left-and-right direction.

Next, the stopper 95 will be described. The stopper 95 is made of rigid resin or metal. As shown in FIG. 3, one end 95a (fixed end) of the stopper 95 is rotatably supported by the rotational shaft 105 provided between the first tray plate 91 and the second tray plate 93. The other end 95b (movable end) of the stopper 95 is movably supported by the elongated holes 113 formed in the side walls of the upper recess 111b of the housing recess 111 of the conveying part 11.

The operation of the stopper 95 at the time of opening and closing the second discharge tray 17 will be described. When the second discharge tray 17 in the fully closed posture (see FIG. 1) is opened, the second tray plate 93 is first turned to some extent with respect to the first tray plate 91, and then the first tray plate 91 is turned downward with respect to the conveying part 11. When the first tray plate 91 is turned, the fixed end 95a of the stopper 95 is pulled by the first tray plate 91, and the movable end 95b is moved leftward in the elongated holes 113. The first tray plate 91 is turned until the movable end 95b of the stopper 95 is locked to the left ends of the elongated holes 113, and the second tray plate 93 is turned at 180° with respect to the first tray plate 91. As a result, the second discharge tray 17 is turned to the fully opened posture (see FIG. 2).

When closing the second discharge tray 17, first, the second tray plate 93 is turned (closed) by a certain angle with respect to the first tray plate 91, and then, the first tray plate 91 is turned upward. Then, the first tray plate 91 is housed in the left recess 111a of the housing recess 111, and the second tray plate 93 is housed in the upper recess 111b of the housing recess 111. Since the stopper 95 has rigidity, when the first tray plate 91 is turned upward, the stopper 95 is pushed by the first tray plate 91, and the movable end 95b moves rightward in the elongated holes 113. As described above, when the second discharge tray 17 is closed, the movable end 95b of the stopper 95 moves rightward from the left ends of the elongated holes 113.

Since the second discharge tray 17 has a predetermined weight, it can be turned into the fully opened posture or the fully closed posture by its own weight. Here, as shown in FIG. 3, a force for turning the second discharge tray 17 in the closing direction caused by its own weight is referred to as F1, and a force for turning the second discharge tray 17 in the opening direction caused by its own weight is referred to as F2. When the second discharge tray 17 in the fully opened posture is closed and the movable end 95b of the stopper 95 reaches a position P separated by a predetermined distance from the left ends of the elongated holes 113, the force F1 is larger than the force F2 (F1 > F2), and the second discharge tray 17 is turned to the fully closed posture by its own weight. When the second discharge tray 17 is turned to the fully closed posture, the movable end 95b moves rightward beyond the position P. On the other hand, when the movable end 95b reaches in front of the position P, the force F1 is smaller than the force F2 (F1 < F2), and the second discharge tray 17 is turned in the opening direction by its own weight.

Next, the torsion coil spring 97 will be described. As shown in FIG. 3, the coil portion 97a of the torsion coil spring 97 is externally fitted to a boss 111c provided below the elongated holes 113. The fixed arm portion 97b of the torsion coil spring 97 is locked to a fixing piece (not shown) provided on the lateral side of the boss 111c. The movable arm portion 97c of the torsion coil spring 97 crosses the elongated holes 113 on the left side of the movable end 95b of the stopper 95. More specifically, the movable arm portion 97c crosses the elongated holes 113 at a position where it comes into contact with the movable end 95b of the stopper 95 moved to the position P from the left side (from the left end side of the elongated holes 113).

When the second discharge tray 17 is turned to the fully opened posture, the movable end 95b of the stopper 95 is locked to the left ends of the elongated holes 113 as described above. That is, since the movable end 95b moves leftward from the position P, a load is applied to the movable arm portion 97c, and the movable arm portion 97c is displaced toward the fixed arm portion 97b. When the second discharge tray 17 is turned to the fully opened posture and the movable end 95b of the stopper 95 is locked to the left ends of the elongated holes 113, a rightward biasing force is applied from the movable arm portion 97c to the movable end 95b. The biasing force is set to be smaller than the force F2 for turning the second discharge tray in the opening direction caused by its own weight. Therefore, the second discharge tray 17 can be turned to the fully opened posture against the biasing force of the torsion coil spring 97.

Further, the conveying part 11 is further provided with an optical sensor 121 (see FIG. 3) which blocks or forms an optical path by the light blocking piece 103 provided on the first tray plate 91. When the second discharge tray 17 is turned to the fully opened posture, the optical path of the optical sensor 121 is blocked by the light blocking piece 103, and the optical sensor 121 is switched from an OFF state to an ON state. When the second discharge tray 17 is turned from the fully opened posture, the light blocking piece is separated from the optical path, and the optical sensor 121 is switched from the ON state to the OFF state. As described above, the optical sensor 121 is an example of the detection sensor which detects the cover (the second discharge tray 17) turned in the fully opened posture according to the present disclosure.

The optical sensor 121 outputs an ON signal indicating the ON state and an OFF signal indicating the OFF state to a control part (not shown). When the ON signal is input from the optical sensor 121, the control part permits the discharging the document through the second discharge port 25, and when the OFF signal is input, the control part regulates the discharging the document through the second discharge port 25.

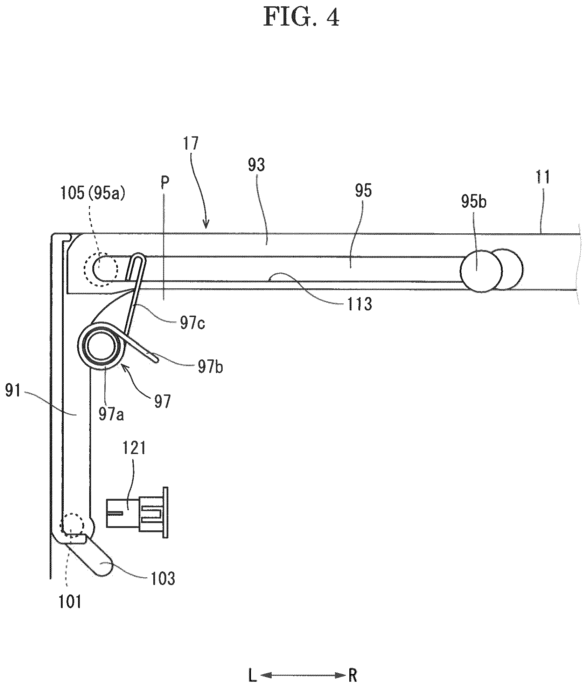

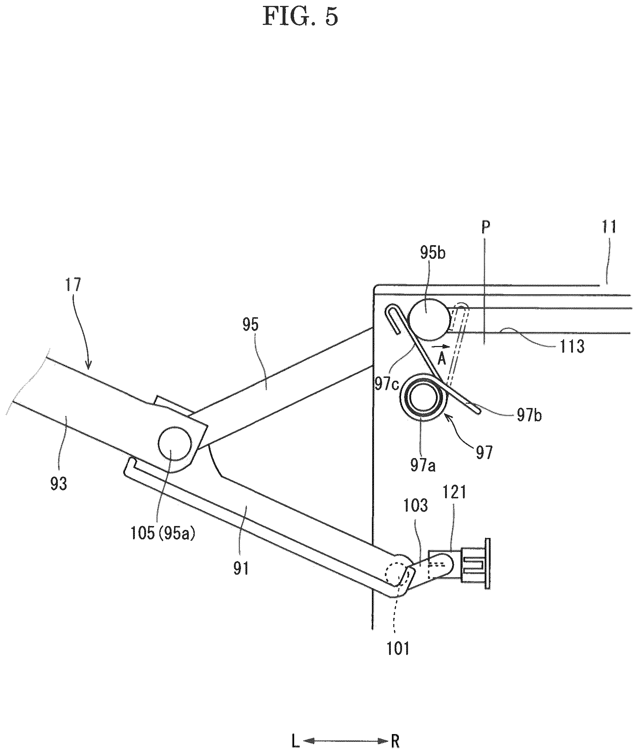

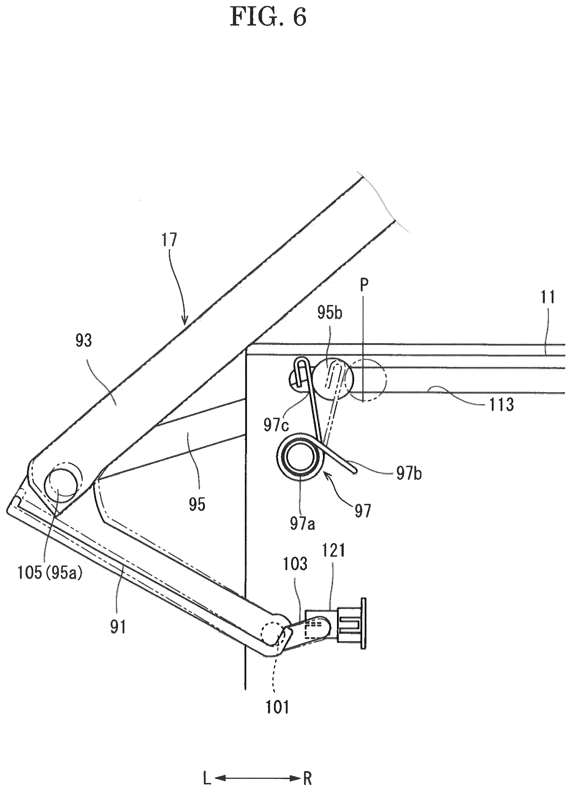

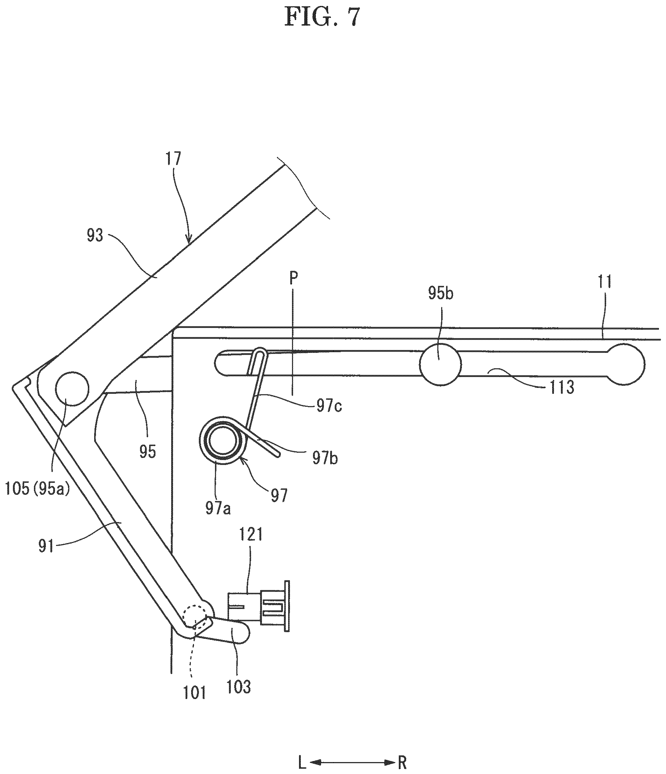

With reference to FIG. 4 to FIG. 7, an example of the opening and closing operation of the second discharge tray 17 in the document conveying device 1 having the above configuration will be described. FIG. 4 schematically shows the second discharge tray 17 in the fully closed posture, FIG. 5 schematically shows the second discharge tray 17 in the fully opened posture, FIG. 6 schematically shows the second discharge tray 17 during the turning, and FIG. 7 schematically shows the second discharge tray 17 in the half-open posture. In the case of a normal document, since the document is discharged through the first discharge port 23 (see FIG. 1 and FIG. 2), as shown in FIG. 4, the second discharge tray 17 is turned in the fully closed posture and is housed in the housing recess 111 (not shown in FIG. 4, see FIG. 1 and FIG. 2). The optical sensor 121 is in the off state and outputs the off signal to the control part. The control part regulates the discharging the document through the second discharge port 25.

When a special document is discharged from the second discharge port 25, the second discharge tray 17 is turned from the fully closed posture to the fully opened posture. First, as described above, the second tray plate 93 is turned with respect to the first tray plate 91, and then the first tray plate 91 is turned with respect to the conveying part 11. As shown in FIG. 5, the first tray plate 91 is turned until the movable end 95b of the stopper 95 is locked to the left ends of the elongated holes 113. The second tray plate 93 is turned at an angle of 180° with respect to the first tray plate 91. As a result, the second discharge tray 17 is turned to the fully opened posture. The optical path of the optical sensor 121 is blocked by the light blocking piece 103. Thus, the optical sensor 121 is switched from the OFF state to the ON state, and outputs the ON signal to the control part. The control part permits the discharging the document through the second discharge port 25 (not shown in FIG. 5, see FIG. 1 and FIG. 2) .

When the second discharge tray 17 is turned to the fully opened posture as described above, the movable arm portion 97c of the torsion coil spring 97 is pushed by the movable end 95b of the stopper 95 and is displaced. Thus, the rightward biasing force A is applied to the movable end 95b. As described above, since the force A is smaller than the force F2 (the force for turning the second discharge tray 17 in the opening direction caused by its own weight), the movable end 95b does not move toward the position P and the second discharge tray 17 is not turned in the closing direction.

When the second discharge tray 17 is closed, first, the second tray plate 93 is turned with respect to the first tray plate 91, and then, the first tray plate 91 is turned upward with respect to the conveying part 11. When the first tray plate 91 is turned, as shown in FIG. 6, the stopper 95 is pushed by the first tray plate 91, and the movable end 95b moves rightward in the elongated holes 113 from the left ends. At this time, the rightward force A is applied to the movable end 95b by the movable arm portion 97c of the torsion coil spring 97, so that the movable end 95b is biased rightward. Then, the first tray plate 91 is pulled by the stopper 95 and turned in the closing direction. Then, when the movable end 95b reaches the position P (refer to the dash-dotted line in FIG. 6), as described above, F1 (the force for turning the second discharge tray 17 in the closing direction caused by its own weight) becomes larger than F2 (the force to turn the second discharge tray 17 in the opening direction generated by its own weight) (F1 > F2), and the second discharge tray 17 is turned in the closing direction by the its own weight, and then housed in the housing recess 111 (the fully closed posture). As described above, the torsion coil spring 97 is an example of the biasing member which moves the movable end 95b of the stopper 95 from one end of the elongated hole 113 to the position P according to the present disclosure.

When the second discharge tray 17 is turned to the fully closed posture as described above, as shown in FIG. 4, the movable end 95b of the stopper 95 moves rightward in the elongated holes 113 beyond the position P, and the movable arm portion 97c of the torsion coil spring 97 elastically returns to the original posture.

Since the second discharge tray 17 includes the first tray plate 91 and the second tray plate 93 rotatably connected to each other, the tray plates 91 and 93 may be in a half-open state depending on a turning angle of the tray plates. In such a half-open state, the force F1 and the force F2 generated by the self-weight of the second discharge tray 17 are balanced so that both tray plates 91 and 93 are stationary.

In such a half-open state, when the movable end 95b of the stopper 95 is moved only in front of the position P, the movable end 95b of the stopper 95 is biased to the position P by the torsion coil spring 97, so that the second discharge tray 17 is turned to the fully closed posture by the force F1. Therefore, the half-open state does not occur.

In addition, in the half-open state, as shown in FIG. 7, when the movable end 95b of the stopper 95 is moved beyond the position P, the light blocking piece 103 of the first tray plate 91 is separated from the optical path of the optical sensor 121, and the optical sensor 121 is switched to the off state. Accordingly, the OFF signal is output from the optical sensor 121 to the control part, and the control part regulates the discharging the document through the second discharge port 25.

As described above, according to the present disclosure, the torsion coil spring 97 biases the stopper 95 to turn the second discharge tray 17 to the fully closed posture, so that the second discharge tray 17 does not have a half-open state. Specifically, since the torsion coil spring 97 biases the movable end 95b of the stopper 95 from the left ends of the elongated holes 113 to the position P, the second discharge tray 17 can be turned to the fully closed posture by its own weight.

In the half-open state in which the second discharge tray 17 is turned such that the movable end 95b moves beyond the position P, the optical sensor 121 outputs the OFF signal, and the control part regulates the discharging the document through the second discharge port 25. Thus, discharging the document in the half-open state is regulated. In this case, by displaying a message indicating the half-open state on a display unit (not shown), the user can recognize the half-open state, and the half-open state can be eliminated.

Thus, the occurrence of the half-open state of the second discharge tray 17 can be prevented, and the discharging the document through the second discharge port 25 in the half-open state can be regulated.

Further, the biasing force A of the torsion coil spring 97 is larger than a component force of the force F2 in the direction (left direction) opposite to the biasing direction (right direction) of the torsion coil spring 97. Thus, the movable end 95b of the stopper 95 can be reliably moved to the position P.

In the above-described embodiment, as the cover, the second discharge tray 17 on which the document discharged through the second discharge port 25 of the document conveying device 1 is loaded has been described. Since the second discharge tray 17 is used less frequently than the first discharge tray 15, it is likely that it is often forgotten to close or is in the half-open state after use. Therefore, by eliminating the half-open state or regulating the discharging the document in the half-open state by the present disclosure, the special document can be discharged normally.

In addition to the second discharge tray 17, the cover in the present disclosure can be used as a cover for opening and closing an opening of an office apparatus such as an image forming apparatus or an electronic apparatus. For example, it can be used as a cover for opening and closing an opening for taking in and out a toner container of an image forming apparatus.

While the present disclosure has been described for specific embodiments, the present disclosure is not limited to those embodiments. A person skilled in the art may modify the above embodiments without departing from the scope and spirit of the present disclosure.

## Claims

1. A document conveying device (1) comprising:
a cover (17) including a first cover plate (91) and a second cover plate (93), the first cover plate (91) being turnably supported by a side surface of a device main body (11) and covering a part of the side surface, and the second cover plate (93) being turnably connected to the first cover plate (91) and covering a part of an upper surface of the device main body (11);
a stopper (95) which is rigid, has a fixed end (95a) rotatably connected to the cover (17) and a movable end (95b) moving in an elongated hole (113) formed in the device main body (11) accordance with a turning of the cover (17), and supports the cover (17) in a fully opened posture when the movable end (95b) is locked to one end of the elongated hole (113); and
a biasing member (97) which moves the movable end (95b) of the stopper (95) to a position P separated by a predetermined distance from the one end of the elongated hole (113), wherein
when the cover (17) is closed in such a way that the second cover plate (93) is turned with respect to the first cover plate (91) and then the first cover plate (91) is turned with respect to the device main body (11), a force for turning the cover (17) in a closing direction caused by its own weight is set to F1, and a force for turning the cover (17) in an opening direction caused by its own weigh is set to F2, the position P is set such that the force F1 is larger than the force F2 (F1 > F2), and a biasing force of the biasing member (97) is set smaller than the force F2, and
when the cover (17) is closed, in a state where the movable end (95b) of the stopper (95) is moved between the one end and a position in front of the position P, the movable end (95b) is biased to the position P by the biasing member (97), and the cover (17) is turned to a fully closed posture by the force F1.

2. The document conveying device (1) according to claim 1, wherein
the biasing force of the biasing member (97) is larger than a component of the force F2 in a direction opposite to the biasing direction of the biasing member (97) .

3. The document conveying device (1) according to claim 1, further comprising:
a first conveyance path (31) which extends linearly and along which a document placed on a sheet feeding tray (13) is conveyed;
a reading part (49) which reads an image of one side of the document conveyed along the first conveyance path (31) ;
a second conveyance path (32) which is formed to be curved and is branched from the first conveyance path (31) at a branch point on a downstream side of the reading part (49) in a conveyance direction of the document;
a third conveyance path (33) which extends linearly, branched from the first conveyance path (31) at the branch point and extends in the same direction as an extending direction of the first conveyance path (31); and
a discharge port (25) through which the document conveyed along the third conveyance path (33) is discharged, wherein
the cover (17) is also used as a discharge tray on which the document discharged through the discharge port (25) is loaded.

4. The document conveying device (1) according to claim 3, further comprising:
a detection sensor (121) which detects the cover (17) turned to the fully opened posture, wherein
when the detection sensor (121) detects the cover (17), a discharging the document through the discharge port (25) is permitted.
